# EUROPÄISCHE PATENTSCHRIFT

(11) **EP 2 432 357 B1**
(45) Veröffentlichungstag und Bekanntmachung des Hinweises auf die Patenterteilung: **22.07.2015**
(21) Anmeldenummer: 10717126.6
(22) Anmeldetag: 29.04.2010
(51) Int. Cl.: A47J 43/08

(54) **KÜCHENGERÄT MIT EINEM PLANETENGETRIEBE**
KITCHEN APPLIANCE COMPRISING A PLANETARY GEAR
APPAREIL DE CUISINE À ENGRENAGE PLANÉTAIRE

(30) Priorität: 19.05.2009 DE 102009003249
(43) Veröffentlichungstag der Anmeldung: 28.03.2012
(73) Patentinhaber: BSH Hausgeräte GmbH, 81739 München (DE)
(72) Erfinder: KOVACIC, Peter, 3303 Gomilsko (SI); PESEC, Jurij, 3301 Petrovce Slowenien (SI)
(86) Internationale Anmeldenummer: PCT/EP2010/055774
(87) Internationale Veröffentlichungsnummer: WO 2010/133432

(56) Entgegenhaltungen:
- EP-A1- 0 880 931
- DE-A1- 3 644 268

## Beschreibung

### Hintergrund der Erfindung

Die vorliegende Erfindung betrifft ein Küchengerät mit einer Antriebseinrichtung, wobei die Antriebseinrichtung ein Planetengetriebe aufweist, welches ein Sonnenrad, mindestens ein Planetenrad, das auf einem Planetenträger angeordnet ist und ein Hohlrad, das in einem Getriebegehäuse des Planetengetriebes angeordnet ist, umfasst, wobei der Planetenträger eine Abtriebswelle antreibt.

### Stand der Technik

Küchengeräte werden im Allgemeinen von einem elektrischen Universalmotor angetrieben. Die hohe Drehzahl des Elektromotors wird anschließend mit Hilfe eines Getriebes, insbesondere eines Planetengetriebes, auf eine Abtriebswelle des Küchengeräts übertragen, welche wiederum ein Werkzeug antreiben kann. Somit kann das Planetengetriebe große Übersetzungsstufen und große Drehmomente ermöglichen, da die mehrfachen Planeten die Leistung teilen und übertragen. Solch Küchengeräte mit entsprechenden Antriebseinrichtungen sind in der EP 0 880 931 A 1 und in der DE 36 44 268 A1 offenbart.

Die verwendeten Universalmotoren weisen jedoch keine zusätzliche Lagerung auf, so dass beispielsweise Kippmomente, welche durch geneigte Axialbelastungen entstehen, sich direkt auf die Lagerung des Elektromotors auswirken, so dass die Lebensdauer des Elektromotors negativ beeinflusst wird. Diese Axialbelastungen entstehen beispielsweise durch Belastungen des Werkzeugs durch Lebensmitteln, die auf der Außenweite der Werkzeuge gedrückt werden. Die Kraft, wird dann wiederum durch die Abtriebswelle direkt auf das Getriebe und anschließend auf die Achse des Universalmotors übertragen.

Da die Getriebestufen innerhalb der Küchegeräte üblicherweise aus Kunststoff gefertigt werden, können diese Kippmomente ebenfalls das Getriebe beschädigen.

*Der Erfindung zugrundeliegende Aufgabe*

Der Erfindung liegt die Aufgabe zugrunde, ein Küchengerät bereitzustellen, welches Kippmomente der Antriebsachse effektiv aufnimmt.

### Erfindungsgemäße Lösung

Die Lösung der gestellten Aufgabe gelingt durch ein Küchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Es wird ein Küchengerät mit einer Antriebseinrichtung bereitgestellt. Die Antriebseinrichtung weist ein Planetengetriebe auf. Das Planetengetriebe umfasst ein Sonnenrad, mindestens ein Planetenrad, das auf einem Planetenträger angeordnet ist und ein Hohlrad, das in einem Getriebegehäuse des Planetengetriebes angeordnet ist, wobei der Planetenträger eine Abtriebswelle antreibt. Der Planetenträger ist erfindungsgemäß auf einem Wälzlager in dem Getriebegehäuse angeordnet. Gemäß der Erfindung ist das Wälzlager ein Kugellager. Durch die Verwendung eines Kugellagers kann ein besonders einfacher Aufbau realisiert werden und das Kugellager eignet sich sehr gut zur Aufnahme des Axial- und Radialkräfte, welche durch Belastungen des Werkzeugs des Küchengeräts entstehen können. Das axiale Kippmoment kann folglich aufgenommen werden, und auf das Gehäuse, insbesondere Getriebegehäuse, übertragen werden. Daher wird der Elektromotor und insbesondere die Lagerung des Antriebsachse des Motors nicht beschädigt. Erfindungsgemäß weist das Kugellager einen Innenring und einen Außenring auf, wobei der Innenring am Planetenträger angeordnet ist und der Außenring am Getriebegehäuse angeordnet ist. Der Innenring am Planetenträger bewirkt, dass die Kräfte homogen auf das Wälzlager bzw. Kugellager verteilt werden, welche wiederum den Außenring belasten. Der Außenring verteilt die Kräfte auf das Getriebegehäuse, so dass der Motor nicht beschädigt werden kann.

Somit können Axialkräfte oder Radialkräfte, die auf das Getriebe wirken, aufgenommen werden, so dass das Planetengetriebe nicht beschädigt werden kann. Diese Kräfte werden über die Abtriebsachse, auf welcher ein Werkzeug, beispielsweise eine Raspelscheibe, befestigt ist, übertragen. Das Wälzlager stützt sich direkt auf dem Getriebegehäuse und kann somit die Kräfte aufnehmen und verteilen. Die Motorwelle bzw. die Antriebswelle werden folglich im Wesentlichen keinen Axial- oder Radialkräften ausgesetzt und es kann auf eine gesonderte Lagerung des Universalmotors oder der Antriebswelle verzichtet werden. Erfindungsgemäß wird das Wälzlager direkt auf dem Getriebegehäuse angeordnet, so dass das Getriebegehäuse ein Mittel bildet, welches wie ein Außenring wirkt. Dazu kann im Gehäuse eine Gleit- oder Führungsnut für das Wälzlager gebildet werden. Der Planetenträger liegt auf dem Wälzlager und kann ebenfalls geeignete Führungsnuten oder Gleitnuten aufweisen, welche eingerichtet sind die Axial- oder Radialkräfte auf das Wälzlager zu übertragen.

### Bevorzugte Ausführungsformen

Es ist bevorzugt, dass das Getriebegehäuse in einem Gehäuse des Küchengeräts integriert ist. Durch die integrale Ausführung kann das Getriebegehäuse zusammen mit dem Gerätegehäuse im Wesentlichen in einem Verfahrensschritt hergestellt werden. Im Falle eines Kunststoffgehäuses können folglich Kosten für das Spritzgussverfahren gespart werden.

Bevorzugt sind die Kugeln des Kugellagers auf einem Kugellagerträger, insbesondere auf einem Metallring, angeordnet. Durch die Verwendung eines Trägers werden die Kräfte effektiv auf das Gehäuse verteilt.

Zweckmäßigerweise ist das mindestens eine Planetenrad mit einer Innenverzahnung des Hohlrads in Eingriff. Dadurch kann der Planetenträger als Abtriebswelle verwendet werden. Die Planetenräder umlaufen das Hohlrad, da diese vom Sonnenrad angetrieben werden. Somit wirkt das Getriebe als Untersetzungsgetriebe.

Zweckmäßigerweise weist das Wälzlager Kugelschalen aus Metal, insbesondere aus Stahlblech, auf. Folglich kann die Lebensdauer des Wälzlagers und somit des Küchengeräts erhöht werden.

Bevorzug ist das Hohlrad (verdrehfest in dem Getriebegehäuse angeordnet. Durch diese verdrehfeste Anordnung des Hohlrads können sich die Planetenräder relativ zum Getriebegehäuse bewegen, welches wiederum den Planetenträger in Rotation versetzt. Folglich kann der Planetenträger mittels einer Kupplung mit einer Abtriebswelle des Küchengeräts verbunden werden.

Es ist bevorzugt, dass das Sonnenrad von einer Welle eines Antriebsmotors antreibbar ist. Hierdurch wird das Drehmoment des Elektromotors mit Hilfe des Planetengetriebes auf die Abtriebswelle des Küchengeräts übertragen.

Es ist bevorzugt, dass das Planetengetriebe im Wesentlichen aus Plastikmaterialien, insbesondere Kunststoff hergestellt ist. Durch die Verwendung von Kunststoff kann kostensparsam Hergestellt werden. Zusätzlich wird das Gewicht des Küchengerätes ferner reduziert.

Die Abtriebswelle ist derart eingerichtet ist, um Werkzeuge für das Küchengerät zu empfangen und anzutreiben. Folglich kann das Küchengerät für verschiedene Arbeitsvorgänge, wie Raspeln schneiden oder dergleichen eingesetzt werden.

Gemäß einer bevorzugten Ausführungsform der vorliegenden Erfindung ist das Hohlrad im Getriebegehäuse integral ausgebildet. Durch diese einstückige bzw. integrale Ausführung können viele Produktionsschritte gespart werden, da das Hohlrad zusammen mit dem Gehäuse in einem Verfahrensschritt herstellbar ist.

Bevorzugt ist eine Innenverzahnung des Hohlrads im Getriebegehäuse ausgebildet. Das heißt, dass die Innenverzahnung ebenfalls im Gehäuse ausgebildet werden kann, welches ebenfalls zu einer Einsparung von Kosten und von Verfahrensschritten bei der Produktion führen kann.

Dadurch dass, das Wälzlager im Getriebegehäuse in einer Führungsnut angeordnet ist, bzw. am Planetenträger auf einer Gleitnut gelagert ist, kann eine besonders kompakte Bauweise bereitgestellt werden.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 ein Querschnitt durch ein Küchengerät gemäß der vorliegenden Erfindung; und
Fig. 2 ein weiterer Querschnitt durch das Planetengetriebe in einer Detailansicht.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Erfindung wird anhand einer Küchenmaschine beschrieben, jedoch kann diese ebenfalls für andere Küchengeräte eingesetzt werden, wie Küchenmaschinen Zentrifugalentsafter, Passiergerät, Foodprocessor oder desgleichen. Die Erfindung erhöht die Langlebigkeit der verwendeten elektrischen Universalmotoren und der Übersetzungsgetriebe, insbesondere der Planetengetriebe. Auch ist es denkbar die Erfindung bei Stabmixern oder Handrührer einzusetzen, falls dort Kippmomente, entstanden durch das Arbeitswerkzeug, auftreten.

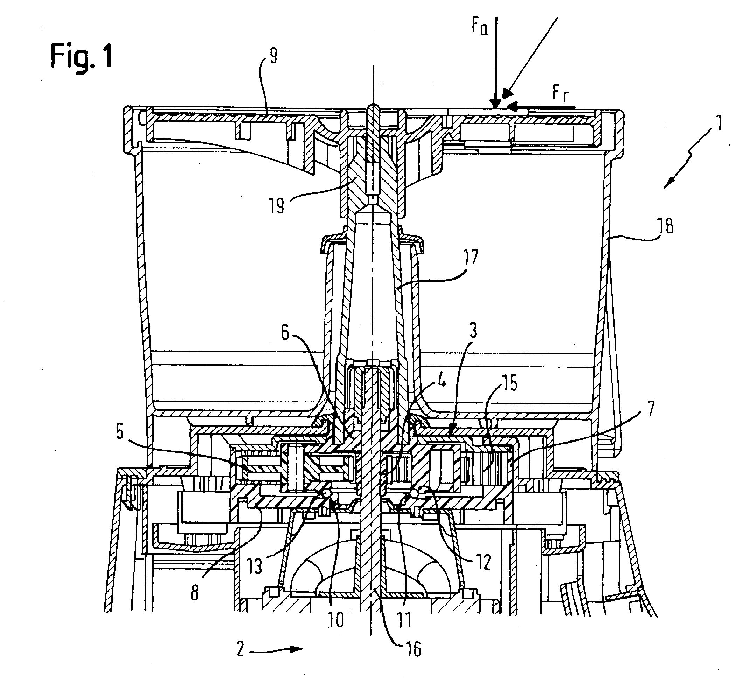

Fig. 1 zeigt einen Querschnitt durch ein Küchengerät gemäß der vorliegenden Erfindung. Das Küchengerät 1 weist einen Behälter 18 auf, in welchem Lebensmitteln verarbeitet werden können. Als Arbeitswerkzeug 9 wird beispielsweise eine Raspelscheibe 9 eingesetzt, welches Lebensmittel zum Verzehr verarbeiten kann. Die Lebensmittel werden durch eine Einfüllöffnung auf die Raspelscheibe 9 eingegeben und kontaktieren die Raspelscheibe 9, wie es schematisch in Fig. 1 anhand der Kräfteverteilung gezeigt ist.

Das Werkzeug 9 wird mit Hilfe einer Abtriebswelle 17 angetrieben, die wiederum von einem Elektromotor über ein Planetengetriebe 3 angetrieben wird. Die Antriebseinrichtung 2 des Küchengeräts 1 wird demnach im Wesentlichen aus einem Elektromotor und einem Planetengetriebe 3 ausgebildet. Die Abtriebswelle 17 wird drehfest mit dem Planetenträger gekuppelt, so dass das Drehmoment auf das Arbeitswerkzeug 9 übertragen werden kann. Das Werkzeug 9 ist ebenfalls mit der Abtriebswelle 17 drehfest mit Hilfe einer Werkzeugkupplung 19 verbunden. Die Abtriebswelle 17 kann zusätzlich in einem Deckel des Behälters 18 drehbar gelagert werden, um die Drehstabilität der Abtriebswelle zu erhöhen.

Der Elektromotor, insbesondere Universalmotor, befindet sich unterhalb des Planetengetriebes 3 und treibt das Sonnenrad 4 an. Das bedeutet, dass das Planetengetriebe 3 entsprechend eines Untersetzungsbetriebes eingesetzt wird, welches die hohe Drehzahl des Universalmotors in eine Arbeitsdrehzahl für das Werkzeug mit hohem Drehmoment transformiert. Bevorzugt ist der Elektromotor unterhalb des Planetengetriebes 3 angeordnet, jedoch ist es ebenfalls denkbar, dass der Elektromotor seitlich versetzt angeordnet ist. In diesem Fall muss das Sonnenrad 4 mittels eines Riemens oder weiterer Zahnräder angetrieben werden.

Beispielsweise weist das Planetengetriebe 3 drei Planetenräder 5 auf, welche auf einem Planetenträger 6 drehbar gelagert sind. Die Planetenräder drehen sich um das Sonnenrad 4, und stehen im Eingriff mit einem Hohlrad 7 des Planetengetriebes 3. Das Hohlrad 7 weist eine Innenverzahnung 15 auf mit welcher die Planetenrädern 5 im Eingriff stehen. Das Hohlrad 7 ist drehfest in dem Getriebegehäuse 8 angeordnet. Das Hohlrad 7 kann beispielsweise im Getriebegehäuse 8 integral ausgebildet werden, welches das Herstellungsverfahren des Planetengetriebes 3 vereinfacht. Gemäß dieser Ausführungsform wird das Hohlrad 7 festgehalten, so dass die Drehmomentübertragung mit Hilfe des Planetenträgers 6 erfolgen kann. Durch den Einsatz dreier Planetenräder 5 erhöht sich die interne Stabilität des Planetengetriebes und zusätzlich kann effektiv das Drehmoment des Sonnenrades 4 übertragen werden.

Das Sonnenrad 4 wird wiederum von einer Antriebswelle 16 des Elektromotors mit einer höheren Drehzahl angetrieben. Bevorzugt wurde das Planetengetriebe 3 aus Kunststoff hergestellt, welches sich als kosteneffizient herausgestellt hat. Es ist jedoch vorstellbar, dass andere Materialien zum Einsatz kommen können.

Durch die Lebensmittel, welche beispielsweise durch die Raspelscheibe 10 verarbeitet werden sollen entstehen Axialkräfte Fₐ und Fᵣ, welche im oberen Teil der Fig. 1 schematisch dargestellt sind. Die Axialkraft, welche zwei Komponenten Fₐ und Fᵣ aufweist, erzeugt einen Kippmoment welcher über die Abtriebswelle 17 auf das Planetengetriebe 3, und insbesondere auf den Planetenträger 6 übertragen wird. Dies kann dazuführen, dass das Getriebe 3, welches üblicherweise im Wesentlichen aus Kunststoff besteht, beschädigt wird. Diese Belastung kann bis auf den Elektromotor übertragen werden, welches seine Lebensdauer negativ beeinflusst.

Um diesem Kippmoment entgegenzuwirken, wird erfindungsgemäß ein Wälzlager 10 im Planetengetriebe vorgesehen, welches die Axial- und Radialkräfte Fₐ bzw. Fᵣ. aufnehmen kann. Das Wälzlager kann beispielsweise ein Kugellager sein, jedoch auch andere Ausführungen wie: Rillenkugellager, Schrägkugellager, Schulterkugellager, Zylinderrollenlager, Nadellager, Kegelrollenlager, Tonnenlager, Toroidalrollenlager oder desgleichen können gemäß der vorliegenden Erfindung eingesetzt werden.

Das Wälzlager insbesondere Kugellager 10 wird dergestalt angeordnet, dass der Planetenträger 6 darauf gleiten kann. Das heißt, dass die Axial-/Radialkräfte, welche durch die Abtriebswelle 17 übertragen werden, von dem Kugellager 10 empfangen werden und an das Getriebegehäuse 8 weitergeleitet werden, ohne dass die Planetenräder 5 bzw. die Innenverzahnung 15 des Hohlrades 7 belastet werden. Die Kugeln 13 des Kugellagers 10 werden relativ nah beieinander angeordnet, so dass sogar sehr geringe Axialkräfte aufgenommen werden können.

Gemäß einer Ausführungsform der vorliegenden Erfindung werden die Kugeln 13 aus Metall ausgebildet und an einem Träger bzw. Metallring 14 angeordnet. Das Kugellager 10 wird direkt zwischen Planetenträger 6 und Getriebegehäuse 8 angeordnet und in geeigneten Führungsnuten 20, 21 platziert. Somit wird auf einen zusätzlichen Innen- oder Außenring verzichtet. Es ist jedoch denkbar, dass metallische Innen- und oder Außenringe 11, 12 vorgesehen sind, welche die Axial- Radialkräfte besser im Getriebegehäuse 8 verteilen können.

In dieser Ausführungsform wird innere Kugellagerschale bzw. Innenring im Getriebegehäuse 8 und die äußere Kugellagerschale Außenring im Planetenträger 6 integriert. Die Lebensdauer des Kugellagers 10 erhöht sich falls beispielsweise metallische Kugelschalen, insbesondere aus Stahlblech eingesetzt werden.

Durch den Einsatz des erfindungsgemäßen Wälzlagers 10 im Planetengetriebe 3, kann auf die gesonderte Lagerung des Elektromotors bzw. Unversalmotors verzichtet werden, welche Axial- oder Radialkräfte aufnehmen kann. Somit kann das Küchengerät besonders kosteneffektiv hergestellt werden.

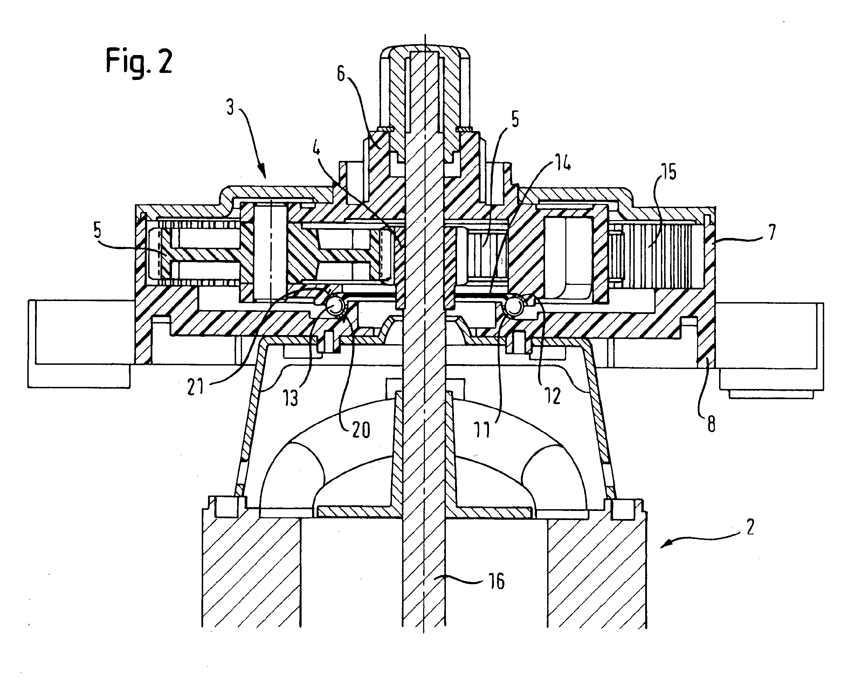

Fig. 2 zeigt das Planetengetriebe 3 eines Küchengeräts 1 gemäß der vorliegenden Erfindung in einer Detailansicht. Die Welle 16 entspricht der Antriebswelle, die von dem oben erwähnten Universalmotor angetrieben wird. Das Getriebegehäuse 8, in welchem der Planetenträger 6, die Planetenräder 5 und das Hohlrad 7 angeordnet sind, besteht beispielsweise im Wesentlichen aus Kunststoff und wurde in einem Spritzgußverfahren vorteilhaft hergestellt. Das Hohlrad 7 und folglich die Innenverzahnung 15 sind vorteilhaft in dem Gehäuse 8 integral ausgebildet, so dass die Planetenräder 5 am Gehäuse 8 bzw. an der Innenverzahnung 15 das Sonnenrad 4 umlaufen. Die Antriebseinrichtung 2 besteht beispielsweise aus einem Universalmotor (nicht dargestellt) und aus einer Antriebswelle 16, die über das Getriebe 3 die Abtriebswelle 17 antreibt. Das Sonnenrad 4 ist drehfest mit der Antriebswelle 16 verbunden und treibt wiederum die Planetenräder 5 an, welche mit der Innenverzahnung 15 des Hohlrads 7 im Eingriff stehen. Die Planetenräder 5 sind auf einem Träger 6 angeordnet auf welchem wiederum die Abtriebswelle 17 mit Hilfe einer Kupplung drehfest verbunden ist. Das Wälzlager 10 ist auf dem Getriebegehäuse 8 in einer Führungsnut 20 angeordnet und kann darauf gleiten. Der Planetenträger 6 weist beispielsweise ebenfalls eine Nut 21, insbesondere eine Gleitnut 21 auf, in welche das Wälzlager 10 ebenfalls gleiten kann. Diese Führungsnuten wirken somit wie ein Innenring bzw. Außenring des Kugellagers 10.

Die Axial- oder Radialkräfte werden somit vom Planetenträger 6 über das Kugellager 10 auf das Getriebegehäuse 3 übertragen. Der Universalmotor bzw. Elektromotor, der das Küchengerät 1 antreibt, benötigt dementsprechend keine kostenintensive Lagerung, um die oben genannten Kräfte aufnehmen zu können. Die Kugeln des Wälzlagers 10 können auf einem metallischen Ring, beispielsweise aus Stahlblech angeordnet werden, um somit die Kräfteverteilung auf das Gehäuse 8 des Planetengetriebes 3 besser verteilen zu können.

Der Planetenträger 6 und das Gehäuse 8 des Planetengetriebes 3 sind insbesondere aus Kunststoff gefertigt. Die Führungsnut 20 auf dem Gehäuse 8 und die Gleitnut 21 auf dem Planetenträger, können während desselben Herstellungsverfahrens ausgebildet werden, so dass kein Innen- bzw. Außenring aus Metall für das Wälzlager notwendig ist. Ferner können metallische Ringe eingesetzt werden, welche verbesserte Verteilung der Kräfte auf das Gehäuse 8 bereitstellen können. Durch das Ausbilden der Führungsnut 20 und der Gleitnut 21 direkt in den jeweiligen Komponenten, kann der Montageaufwand des Küchengeräts reduziert werden, welches wiederum zum Kostenersparnis führt.

### Bezugszeichenliste

- 1: Küchengerät
- 2: Antriebseinrichtung
- 3: Planetengetriebe
- 4: Sonnenrad
- 5: Planetenrad
- 6: Planetenträger
- 7: Hohlrad
- 8: Getriebegehäuse
- 9: Werkzeug, z.B. Raspelwerkzeug
- 10: Wälzlager
- 11: Innenring
- 12: Außenring
- 13: Kugeln des Kugellagers
- 14: Metallring
- 15: Innenverzahnung des Hohlrads
- 16: Welle bzw. Antriebswelle
- 17: Abtriebswelle
- 18: Behälter bzw. Schüssel
- 19: Werkzeugkupplung
- 20: Führungsnut am Getriebegehäuse
- 21: Gleitnut am Planetenträger

## Patentansprüche

1. Küchengerät (1) mit einer Antriebseinrichtung (2), wobei die Antriebseinrichtung (2) ein Planetengetriebe (3) aufweist, welches umfasst:
- ein Sonnenrad (4);
- mindestens ein Planetenrad (5), das auf einem Planetenträger (6) angeordnet ist; und
- ein Hohlrad (7), das in einem Getriebegehäuse (8) des Planetengetriebes (3) angeordnet ist;
wobei der Planetenträger (6) eine Abtriebswelle (17) antreibt, **dadurch gekennzeichnet, dass** der Planetenträger (6) auf einem Wälzlager (10) in dem Getriebegehäuse (8) angeordnet ist, wobei das Wälzlager (10) ein Kugellager ist, **dadurch gekennzeichnet, dass** das Kugellager (10) einen Innenring (11) und einen Außenring (12) aufweist, wobei der Innenring am Getriebegehäuse (8) angeordnet ist und der Außenring (12) am Planetenträger (6) angeordnet ist.

2. Küchengerät (1) nach Anspruch 1, **dadurch gekennzeichnet, dass** das Getriebegehäuse (8) in einem Gehäuse des Küchengeräts (1) integriert ist.

3. Küchengerät (1) nach Anspruch 1, **dadurch gekennzeichnet, dass** Kugeln (13) des Kugellagers (10) auf einem Kugellagerträger, insbesondere auf einem Metallring (14), angeordnet sind.

4. Küchengerät (1) nach einem der vorhergehenden Ansprüche, **dadurch gekennzeichnet, dass** das mindestens eine Planetenrad (5) mit einer Innenverzahnung (15) des Hohlrads (7) in Eingriff steht.

5. Küchengerät (1) nach einem der vorhergehenden Ansprüche, **dadurch gekennzeichnet, dass** das Wälzlager (10) Kugelschalen aus Metal, insbesondere aus Stahlblech, aufweist.

6. Küchengerät (1) nach einem der vorhergehenden Ansprüche, **dadurch gekennzeichnet, dass** das Hohlrad (7) verdrehfest in dem Getriebegehäuse angeordnet ist.

7. Küchengerät (1) nach einem der vorhergehenden Ansprüche, **dadurch gekennzeichnet, dass** das Sonnenrad (4) von einer Welle (16) eines Antriebsmotors antreibbar ist.

8. Küchengerät (1) nach einem der vorhergehenden Ansprüche, **dadurch gekennzeichnet, dass** das Planetengetriebe (3) im Wesentlichen aus Plastikmaterialien, insbesondere Kunststoff hergestellt ist.

9. Küchengerät (1) nach einem der vorhergehenden Ansprüche, **dadurch gekennzeichnet, dass** die Abtriebswelle (17) eingerichtet ist, um Werkzeuge (9) für das Küchengerät (1) zu empfangen und anzutreiben.

10. Küchengerät (1) nach einem der vorhergehenden Ansprüche, **dadurch gekennzeichnet, dass** das Hohlrad (7) im Getriebegehäuse (8) integral ausgebildet ist.

11. Küchengerät (1) nach Anspruch 13, **dadurch gekennzeichnet, dass** eine Innenverzahnung (15) des Hohlrads (7) im Getriebegehäuse ausgebildet ist.

12. Küchengerät (1) nach einem der vorhergehenden Ansprüche, **dadurch gekennzeichnet, dass** das Wälzlager (10) im Getriebegehäuse (8) in einer Führungsnut (20) angeordnet ist.

13. Küchengerät (1) nach einem der vorhergehenden Ansprüche, **dadurch gekennzeichnet, dass** das Wälzlager (10) am Planetenträger (6) auf einer Gleitnut (21) gelagert ist.

## Claims

1. Kitchen appliance (1) having a drive facility (2), wherein the drive facility (2) features a planetary gear (3), which comprises:
- a sun wheel (4);
- at least one planet wheel (5), which is disposed on a planet carrier (6); and
- a hollow wheel (7), which is disposed in a gear housing (8) of the planetary gear (3);
wherein the planet, carrier (6) drives an output shaft (17), **characterised in that** the planet carrier (6) is disposed on a roller bearing (10) in the gear housing (8), with the roller bearing (10) being a ball bearing, **characterised in that** the ball bearing (10) features an inner ring (11) and an outer ring (12), with the inner ring being disposed on the gear housing (8) and the outer ring (12) being disposed on the planet carrier (6).

2. Kitchen appliance (1) according to claim 1, **characterised in that** the gear housing (8) is integrated in a housing of the kitchen appliance (1).

3. Kitchen appliance (1) according to claim 1, **characterised in that** balls (13) of the ball bearing (10) are disposed on a ball bearing carrier, in particular on a metal ring (14).

4. Kitchen appliance (1) according to one of the preceding claims, **characterised in that** the at least one planet wheel (5) engages with an inner toothing (15) of the hollow wheel (7).

5. Kitchen appliance (1) according to one of the preceding claims, **characterised in that** the roller bearing (10) features ball cups made of metal, in particular of sheet steel.

6. Kitchen appliance (1) according to one of the preceding claims, **characterised in that** the hollow wheel (7) is disposed in a twist-resistant manner in the gear housing.

7. Kitchen appliance (1) according to one of the preceding claims, **characterised in that** the sun wheel (4) can be driven by a shaft (16) of a drive motor.

8. Kitchen appliance (1) according to one of the preceding claims, **characterised in that** the planetary gear (3) is made essentially of synthetic materials, in particular plastic.

9. Kitchen appliance (1) according to one of the preceding claims, **characterised in that** the output shaft (17) is designed to receive and drive tools (9) for the kitchen appliance (1).

10. Kitchen appliance (1) according to one of the preceding claims, **characterised in that** the hollow wheel (7) is configured in an integral manner in the gear housing (8).

11. Kitchen appliance (1) according to claim 13, **characterised in that** an inner toothing (15) of the hollow wheel (7) is configured in the gear housing.

12. Kitchen appliance (1) according to one of the preceding claims, **characterised in that** the roller bearing (10) is disposed in a guide channel (20) in the gear housing (8).

13. Kitchen appliance (1) according to one of the preceding claims, **characterised in that** the roller bearing (10) is supported on a slide channel (21) on the planet carrier (6).

## Revendications

1. Appareil de cuisine (1) comprenant un dispositif d'entraînement (2), où le dispositif d'entraînement (2) présente un engrenage planétaire (3) qui comprend :
- une roue solaire (4);
- au moins une roue planétaire (5) qui est disposée sur un support d'engrenage planétaire (6); et
- une roue à denture intérieure (7) qui est disposée dans un carter de protection des engrenages (8) de l'engrenage planétaire (3);
où le support d'engrenage planétaire (6) entraîne un arbre de sortie (17), **caractérisé en ce que** le support d'engrenage planétaire (6) est disposé, dans le carter de protection des engrenages (8), sur un roulement (10), où le roulement (10) est un roulement à billes, **caractérisé en ce que** le roulement à billes (10) présente une bague intérieure (11) et une bague extérieure (12), où la bague intérieure est disposée sur le carter de protection des engrenages (8), et la bague extérieure (12) est disposée sur le support d'engrenage planétaire (6).

2. Appareil de cuisine (1) selon la revendication 1, **caractérisé en ce que** le carter de protection des engrenages (8) est intégré dans un carter de l'appareil de cuisine (1).

3. Appareil de cuisine (1) selon la revendication 1, **caractérisé en ce que** des billes (13) du roulement à billes (10) sont disposées sur un support de roulement à billes, en particulier sur une bague métallique (14).

4. Appareil de cuisine (1) selon l'une quelconque des revendications précédentes, **caractérisé en ce que** l'au moins une roue planétaire (5) est en prise avec une denture intérieure (15) de la roue à denture intérieure (7).

5. Appareil de cuisine (1) selon l'une quelconque des revendications précédentes, **caractérisé en ce que** le roulement (10) présente des calottes sphériques en métal, en particulier formées à partir d'une tôle d'acier.

6. Appareil de cuisine (1) selon l'une quelconque des revendications précédentes, **caractérisé en ce que** la roue à denture intérieure (7) est disposée, dans le carter de protection des engrenages, en résistant à la torsion.

7. Appareil de cuisine (1) selon l'une quelconque des revendications précédentes, **caractérisé en ce que** la roue solaire (4) peut être entraînée par un arbre (16) d'un moteur d'entraînement.

8. Appareil de cuisine (1) selon l'une quelconque des revendications précédentes, **caractérisé en ce que** l'engrenage planétaire (3) est fabriqué essentiellement dans des matières plastiques, en particulier dans une matière synthétique.

9. Appareil de cuisine (1) selon l'une quelconque des revendications précédentes, **caractérisé en ce que** l'arbre de sortie (17) est monté pour recevoir et entraîner des outils (9) prévus pour l'appareil de cuisine (1).

10. Appareil de cuisine (1) selon l'une quelconque des revendications précédentes, **caractérisé en ce que** la roue à denture intérieure (7) est conçue de façon intégrée dans le carter de protection des engrenages (8).

11. Appareil de cuisine (1) selon la revendication 13, **caractérisé en ce qu'**une denture intérieure (15) de la roue à denture intérieure (7) est configurée dans le carter de protection des engrenages.

12. Appareil de cuisine (1) selon l'une quelconque des revendications précédentes, **caractérisé en ce que** le roulement (10) est disposé dans une rainure de guidage (20) située dans le carter de protection des engrenages (8).

13. Appareil de cuisine (1) selon l'une quelconque des revendications précédentes, **caractérisé en ce que** le roulement (10) est logé sur une rainure de glissement (21) située sur le support d'engrenage planétaire (6).
